# EUROPEAN PATENT APPLICATION

(11) **EP 4 428 188 A1**
(43) Date of publication of application: **11.09.2024**
(21) Application number: 22889689.0
(22) Date of filing: 28.09.2022
(51) Int. Cl.: C08L 9/00, B60C 1/00, B60C 15/06, C08K 3/06, C08K 3/36, C08K 5/36, C08K 5/44, C08L 7/00

(54) **RUBBER COMPOSITION AND TIRE MADE THEREFROM**

(30) Priority: 05.11.2021 JP 2021180750
(71) Applicant: The Yokohama Rubber Co., Ltd., Hiratsuka-shi, Kanagawa 254-8601 (JP)
(72) Inventor: KITAMURA, Takamasa, Hiratsuka-shi, Kanagawa 254-8601 (JP); KARASAWA, Yuichiro, Hiratsuka-shi, Kanagawa 254-8601 (JP)
(74) Representative: Dilg, Haeusler, Schindelmann Patentanwaltsgesellschaft mbH
(86) International application number: PCT/JP2022/036153
(87) International publication number: WO 2023/079865

(57) **Abstract**

The present invention describes a rubber composition containing at least a rubber, a filler, a sulfur-containing silane coupling agent, and a vulcanization accelerator; the rubber containing from 30 to 60 parts by mass of an NR and from 40 to 70 parts by mass of a BR; the filler containing a carbon black and a silica; the carbon black having a CTAB specific surface area of from 60 to 160 m²/g; the silica having a CTAB specific surface area of from 60 to 100 m²/g; a blended amount of the filler is from 55 to 75 parts by mass per 100 parts by mass of the rubber; a blended amount of the silica (silica proportion) with respect to the blended amount of the filler being 10 mass% or more; and a blended amount of the vulcanization accelerator with respect to the silica being from 2.5 to 8 mass%.

## Description

### Technical Field

The present invention relates to a rubber composition and a tire containing the rubber composition; and specifically, the present invention relates to a rubber composition having practically adequate hardness and wear resistance and having excellent low heat build-up and elongation at break, and a tire containing the rubber composition.

### Background Art

A pneumatic tire mainly includes a pair of left and right bead portions and sidewall portions, and a tread portion that is continuous with both sidewall portions and that includes a cap tread and an undertread. A carcass layer is provided on the inner side of the tire, and both end portions of the carcass layer are folded back from the tire inner side toward the outer side to wrap a bead core in the bead portion.

A rim cushion rubber that is a rubber layer constituting the contact surface for a rim is disposed on the inner side in the tire radial direction and on the outer side in the tire width direction of the bead core.

Meanwhile, a reduction in weight and heat build-up of a tire has been attempted for environmental impact reduction. For example, although there is a technique of blending a low-grade carbon black having a small specific surface area to reduce tan δ (60°C) of a rubber, it is difficult to achieve adequate hardness, low heat build-up, elongation at break, and wear resistance in a well-balanced manner.

For example, Patent Document 1 describes a rubber composition for a sidewall or a clinch, the rubber composition containing, per 100 parts by mass of a rubber component, 2 parts by mass or more of a wet silica having a BET specific surface area of 70 to 250 m²/g, 20 parts by mass or more and less than 40 parts by mass of a carbon black having a BET specific surface area of 27 to 125 m²/g, and from 2.0 to 7.0 parts by mass of at least one selected from the group consisting of phenylenediamine-based and quinoline-based anti-aging agents, wherein a content of the wet silica is 1/4 or less of a total amount of a reinforcing filler contained in the rubber composition, and no silane coupling agent is contained; however, the rubber composition lacks a good balance of adequate hardness, low heat build-up, elongation at break, and wear resistance, and there is room for improvement.

### Citation List

### Patent Document

Patent Document 1: JP 5647170 B

### Summary of Invention

### Technical Problem

Therefore, an object of the present invention is to provide a rubber composition that has practically adequate hardness and wear resistance and has excellent low heat build-up and elongation at break; and a tire containing the rubber composition.

### Solution to Problem

As a result of diligent research, the present inventors have found that the problem described above can be solved by a rubber composition containing at least a rubber, a filler, a sulfur-containing silane coupling agent, and a vulcanization accelerator, wherein formulations and blended amounts of the rubber and the filler and a blended amount of the vulcanization accelerator are specified. Thus, the present inventors have completed the present invention.

In other words, an embodiment of the present invention provides a rubber composition containing at least a rubber, a filler, a sulfur-containing silane coupling agent, and a vulcanization accelerator;
the rubber containing from 30 to 60 parts by mass of an isoprene-based rubber and from 40 to 70 parts by mass of a butadiene rubber;
the filler containing a carbon black and a silica;
the carbon black having a CTAB specific surface area of from 60 to 160 m²/g;
the silica having a CTAB specific surface area of from 60 to 100 m²/g;
a blended amount of the filler being from 55 to 75 parts by mass per 100 parts by mass of the rubber;
a blended amount of the silica (silica proportion) with respect to the blended amount of the filler being 10 mass% or more; and
a blended amount of the vulcanization accelerator with respect to the silica proportion being from 2.5 to 8 mass%.

### Advantageous Effects of Invention

The rubber composition according to an embodiment of the present invention contains a silica having a CTAB specific surface area of 60 to 100 m²/g, i.e., a large particle size silica, and achieves hardness, low heat build-up, elongation at break, and wear resistance in a well-balanced manner to a high degree. Although elongation at break is improved by simply blending a large particle size silica, low heat build-up is not improved, and wear resistance is deteriorated. As a result of diligent research, the present inventors have successfully achieved low heat build-up and wear resistance in a well-balanced manner to a high degree while an improvement in elongation at break caused by the large particle size silica is maintained by specifying the formulations and blended amounts of the rubber and the filler and the blended amount of the vulcanization accelerator.

Thus, according to the present invention, there can be provided a rubber composition that has practically adequate hardness and wear resistance and has excellent low heat build-up and elongation at break; and a tire containing the rubber composition.

### Description of Embodiments

The present invention will be described in further detail below.

### Rubber

The rubber used in an embodiment of the present invention contains an isoprene-based rubber and a butadiene rubber (BR) as essential components. As the isoprene-based rubber, for example, a natural rubber (NR) or a synthetic isoprene rubber (IR) is suitably used. The blended amount of the isoprene-based rubber is from 30 to 60 parts by mass when the amount of the entire rubber is taken as 100 parts by mass, and the blended amount of the BR is from 40 to 70 parts by mass when the amount of the entire rubber is taken as 100 parts by mass. When the blended amount of each of these rubbers is out of the range described above, the desired effects of the present invention cannot be sufficiently achieved.

The blended amount of the isoprene-based rubber is preferably from 40 to 60 parts by mass, and the blended amount of the BR is preferably from 40 to 60 parts by mass.

Examples of an additional diene-based rubber that is used besides the isoprene-based rubber and the BR include an acrylonitrile-butadiene copolymer rubber (NBR) and an ethylene-propylene-diene terpolymer (EPDM).

The molecular weight and the microstructure of the rubber used in an embodiment of the present invention are not particularly limited. The rubber may be terminal-modified with an amine, amide, silyl, alkoxysilyl, carboxyl, or hydroxyl group, or may be epoxidized.

### Filler

The filler usable in an embodiment of the present invention is a filler that is ordinarily blended in a rubber composition, and contains carbon black and silica as essential components.

The carbon black used in an embodiment of the present invention is required to have a CTAB specific surface area of 60 to 160 m²/g. When the CTAB specific surface area of the carbon black is out of the range described above, the desired effects of the present invention cannot be adequately achieved. The CTAB specific surface area of the carbon black is preferably from 70 to 130 m²/g, and more preferably from 80 to 130 m²/g.

Meanwhile, the silica used in an embodiment of the present invention is required to have a CTAB specific surface area of 60 to 100 m²/g. When the CTAB specific surface area of the carbon black is out of the range described above, the desired effects of the present invention cannot be adequately achieved. A more preferred CTAB specific surface area of the silica is from 65 to 95 m²/g.

As the filler used in an embodiment of the present invention, besides the carbon black and the silica described above, for example, a filler such as clay, talc, or calcium carbonate can be used in combination as necessary.

The CTAB specific surface area is measured in accordance with JIS K 6217-3:2001 "Part 3: Determination of specific surface area - CTAB adsorption method".

### Sulfur-containing silane coupling agent

The sulfur-containing silane coupling agent used in an embodiment of the present invention is not particularly limited. Examples thereof include bis(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, and 3-octanoylthiopropyltriethoxysilane. One type or two or more types of the silane coupling agents may be used in combination.

### Vulcanization Accelerator

The vulcanization accelerator used in an embodiment of the present invention may be a vulcanization accelerator that is typically blended in a rubber composition. From the perspective of improving the effects of the present invention, a sulfenamide-based vulcanization accelerator or a thiuram-based vulcanization accelerator is preferred.

Preferred examples of the sulfenamide-based vulcanization accelerator include N-cyclohexyl-2-benzothiazolylsulfenamide, N-tert-butyl-2-benzothiazolylsulfenamide, and N,N'-dicyclohexyl-2-benzothiazolylsulfenamide. N-Cyclohexyl-2-benzothiazolylsulfenamide can be obtained as trade name "NOCCELER CZ-G" available from Ouchi Shinko Chemical Industrial Co., Ltd. N-Tert-butyl-2-benzothiazolylsulfenamide can be obtained as trade name "NOCCELER NS-P" available from Ouchi Shinko Chemical Industrial Co., Ltd.

Preferred examples of the thiuram-based vulcanization accelerator include tetramethylthiuram disulfide, tetraethylthiuram disulfide, tetrabutylthiuram disulfide, tetrabenzylthiuram disulfide, tetrakis(2-ethylhexyl)thiuram disulfide, tetramethylthiuram monosulfide, and dipentamethylenethiuram tetrasulfide.

### Blended Proportion of Rubber Composition

The rubber composition according to an embodiment of the present invention contains from 55 to 75 parts by mass of a filler per 100 parts by mass of the rubber. When the blended amount of the filler is out of the range described above, the desired effects of the present invention cannot be sufficiently achieved.

The blended amount of the silica (silica proportion) is required to be 10 mass% or more and is preferably from 20 to 95 mass%, and more preferably from 40 to 90 mass%, with respect to the amount of the filler. When the blended amount of the silica (silica proportion) is less than 10 mass%, an effect of improving elongation at break is insufficient, low heat build-up is not achieved, and wear resistance is deteriorated.

The blended amount of the vulcanization accelerator is required to be from 2.5 to 8 mass% and is preferably from 2.8 to 7.6 mass%, with respect to the silica proportion. When the blended amount of the vulcanization accelerator is less than 2.5 mass%, hardness and wear resistance are deteriorated, whereas when the blended amount is more than 8 mass%, elongation at break is deteriorated.

From the perspective of achieving hardness, low heat build-up, elongation at break, and wear resistance in a well-balanced manner to a high degree, the blended amounts of the carbon black and the silica are preferably set to proper ranges in the rubber composition according to an embodiment of the present invention. In other words, the blended amounts of the carbon black and the silica preferably satisfy Formula (1) below, and more preferably satisfy Formula (2) below. When the resultant value of Formula (1) below is 5500 or more, hardness and wear resistance are improved. When the resultant value of Formula (1) below is 7100 or less, even better low heat build-up is achieved. {The CTAB specific surface area of the carbon black (m2/g) × the blended amount of the carbon black (parts by mass)} + {the CTAB specific surface area of the silica (m2/g) × the blended amount of the silica (parts by mass)} = 5500 to 7100 {The CTAB specific surface area of the carbon black (m2/g) × the blended amount of the carbon black (parts by mass)} + {the CTAB specific surface area of the silica (m2/g) × the blended amount of the silica (parts by mass)} = 5800 to 6800

### Additional Components

In addition to the components described above, the rubber composition according to an embodiment of the present invention may contain any type of additive commonly blended in rubber compositions, such as a vulcanizing or crosslinking agent; a vulcanizing or crosslinking accelerator; zinc oxide; an anti-aging agent; and a plasticizer. These additives may be kneaded by a common method to form a composition and used to perform vulcanization or crosslinking. The blended amount of such an additive may be any standard blended amount in the related art, so long as the object of the present invention is not hindered.

In the case where zinc oxide is blended, the blended amount thereof is preferably 3.5 parts by mass or less, and more preferably from 0.8 to 3.2 parts by mass, per 100 parts by mass of the rubber.

The tire according to an embodiment of the present invention is preferably a pneumatic tire, and can be inflated with air, an inert gas such as nitrogen, or another gas. The rubber composition according to an embodiment of the present invention is preferably used in a rim cushion because the rubber composition has practically adequate hardness and wear resistance and has excellent low heat build-up and elongation at break. The tire according to an embodiment of the present invention can be produced by a tire production method known in the art.

### Examples

The present invention will be described in further detail by way of Examples and Comparative Examples, but the present invention is not limited to these Examples.

### Standard Example, Examples 1 to 8, and Comparative Examples 1 to 3

In the formulation (parts by mass) shown in Table 1, the components other than vulcanization components (vulcanization accelerator and sulfur) and a curing agent were kneaded for 5 minutes in a 1.7-L sealed Banbury mixer. The resultant mixture was then discharged from the mixer and cooled to room temperature. Thereafter, the resultant composition was placed into the same Banbury mixer again, and the vulcanization components were added to and kneaded with the composition, to thereby produce a rubber composition. The produced rubber composition was press-vulcanized at 170°C for 10 minutes, and then the test methods shown below were used to measure physical properties.

Hardness: measured at 20°C in accordance with JIS K 6253. The results are indicated as index values with respect to the value of Standard Example that is taken as 100. A larger index value indicates higher hardness.

Heat build-up: a viscoelastic spectrometer (available from Toyo Seiki Seisaku-sho, Ltd.) was used to measure a tan δ (60°C) under the following conditions: initial distortion = 10%, amplitude = ±2%, frequency = 20 Hz. The value was then used to evaluate heat build-up. The results are indicated as index values with respect to the value of Standard Example that is taken as 100. A smaller index value indicates lower heat build-up.

Elongation at break EB: elongation at break was tested at room temperature in accordance with JIS K 6251. The results are indicated as index values with respect to the value of Standard Example that is taken as 100. A larger index value indicates higher elongation at break.

Wear resistance: the amount of wear was measured using a Pico abrasion tester in accordance with ASTM-D2228. The results are indicated as index values with respect to the reciprocal of the value of Standard Example that is taken as 100. A larger index value indicates superior wear resistance.

The results are shown in Table 1.

**[Table 1-1]**

| | Standard Example | Comparative Example 1 | Example 1 | Example 2 | Example 3 |
|---|---|---|---|---|---|
| NR *1 | 50 | 50 | 50 | 50 | 50 |
| BR *2 | 50 | 50 | 50 | 50 | 50 |
| Carbon black 1 *3 | - | - | - | - | - |
| Carbon black 2 *4 | 65 | 25 | 25 | 25 | 25 |
| Carbon black 3 *5 | - | - | - | - | - |
| Silica 1 *6 | - | 40 | 40 | 40 | 40 |
| Silica 2 *7 | - | - | - | - | - |
| Sulfur-containing silane coupling agent *8 | - | 2.8 | 2.8 | 2.8 | 2.8 |
| Zinc oxide *9 | 3 | 3 | 3 | 3 | 3 |
| Stearic acid *10 | 2 | 2 | 2 | 2 | 2 |
| Anti-aging agent 6C *11 | 2 | 2 | 2 | 2 | 2 |
| Anti-aging agent RD *12 | 1 | 1 | 1 | 1 | 1 |
| Wax *13 | 1 | 1 | 1 | 1 | 1 |
| Aroma oil *14 | 5 | 5 | 5 | 5 | 5 |
| Insoluble sulfur *15 | 2.5 | 2.5 | 2.5 | 2.5 | 2.0 |
| Sulfenamide-based vulcanization accelerator * 16 | 2.5 | 1.0 | 2.5 | 2.0 | 4.0 |
| Diphenylguanidine-based vulcanization accelerator *17 | - | 0.3 | - | 0.3 | 0.3 |
| Thiuram vulcanization accelerator *18 | - | - | - | - | - |
| Blended amount of filler (parts by mass) | 65 | 65 | 65 | 65 | 65 |
| Blended amount of silica with respect to that of filler (wt.%) | 0 | 62 | 62 | 62 | 62 |
| Total blended amount of vulcanization accelerators (parts by mass) | 2.5 | 1.3 | 2.5 | 2.3 | 4.3 |
| Blended amount of vulcanization accelerator with respect to silica proportion (wt.%) | - | 2.1 | 4.1 | 3.7 | 7.0 |
| Value of Formula (1) | 7475 | 6275 | 6275 | 6275 | 6275 |
| Hardness | 100 | 95 | 102 | 101 | 106 |
| tan δ (60°C) | 100 | 100 | 75 | 80 | 55 |
| EB | 100 | 150 | 125 | 130 | 105 |
| Wear resistance | 100 | 85 | 103 | 100 | 105 |

**[Table 1-2]**

| | Comparative Example 2 | Example 4 | Example 5 | Example 6 |
|---|---|---|---|---|
| NR *1 | 50 | 50 | 50 | 50 |
| BR *2 | 50 | 50 | 50 | 50 |
| Carbon black 1 *3 | - | - | - | 20 |
| Carbon black 2 *4 | 25 | 25 | 25 | - |
| Carbon black 3 *5 | - | - | - | - |
| Silica 1 *6 | 40 | 30 | 50 | 40 |
| Silica 2 *7 | - | - | - | - |
| Sulfur-containing silane coupling agent *8 | 2.8 | 2.1 | 3.5 | 2.8 |
| Zinc oxide *9 | 3 | 3 | 3 | 3 |
| Stearic acid *10 | 2 | 2 | 2 | 2 |
| Anti-aging agent 6C *11 | 2 | 2 | 2 | 2 |
| Anti-aging agent RD * 12 | 1 | 1 | 1 | 1 |
| Wax *13 | 1 | 1 | 1 | 1 |
| Aroma oil *14 | 5 | 5 | 5 | 5 |
| Insoluble sulfur *15 | 2.5 | 2.5 | 2.5 | 2.5 |
| Sulfenamide-based vulcanization accelerator * 16 | 6.0 | 2.5 | 1.5 | 2.0 |
| Diphenylguanidine-based vulcanization accelerator *17 | 0.3 | 0.3 | 0.3 | 0.3 |
| Thiuram vulcanization accelerator *18 | - | - | - | - |
| Blended amount of filler (parts by mass) | 65 | 55 | 75 | 60 |
| Blended amount of silica with respect to that of filler (wt.%) | 62 | 55 | 67 | 67 |
| Total blended amount of vulcanization accelerators (parts by mass) | 6.3 | 2.8 | 1.8 | 2.3 |
| Blended amount of vulcanization accelerator with respect to silica proportion (wt.%) | 10.2 | 5.1 | 2.7 | 3.5 |
| Value of Formula (1) | 6275 | 5425 | 7125 | 6300 |
| Hardness | 109 | 99 | 102 | 104 |
| tan δ (60°C) | 45 | 70 | 90 | 89 |
| EB | 80 | 108 | 107 | 115 |
| Wear resistance | 99 | 97 | 103 | 110 |

**[Table 1-3]**

| | Example 7 | Example 8 | Comparative Example 3 |
|---|---|---|---|
| NR *1 | 50 | 50 | 50 |
| BR *2 | 50 | 50 | 50 |
| Carbon black 1 *3 | - | - | - |
| Carbon black 2 *4 | 25 | - | 25 |
| Carbon black 3 *5 | - | 30 | - |
| Silica 1 *6 | 40 | 40 | - |
| Silica 2 *7 | - | - | 40 |
| Sulfur-containing silane coupling agent *8 | 2.8 | 2.8 | 2.8 |
| Zinc oxide *9 | 3 | 3 | 3 |
| Stearic acid *10 | 2 | 2 | 2 |
| Anti-aging agent 6C *11 | 2 | 2 | 2 |
| Anti-aging agent RD * 12 | 1 | 1 | 1 |
| Wax *13 | 1 | 1 | 1 |
| Aroma oil *14 | 5 | 5 | 5 |
| Insoluble sulfur * 15 | 2.5 | 2.5 | 2.5 |
| Sulfenamide-based vulcanization accelerator * 16 | 2.0 | 2.0 | 2.5 |
| Diphenylguanidine-based vulcanization accelerator *17 | - | 0.3 | - |
| Thiuram vulcanization accelerator *18 | 0.3 | - | - |
| Blended amount of filler (parts by mass) | 65 | 65 | 65 |
| Blended amount of silica with respect to that of filler (wt.%) | 62 | 62 | 62 |
| Total blended amount of vulcanization accelerators (parts by mass) | 2.3 | 2.5 | 2.5 |
| Blended amount of vulcanization accelerator with respect to silica proportion (wt.%) | 4.1 | 4.1 | 4.1 |
| Value of Formula (1) | 6275 | 5650 | 7475 |
| Hardness | 105 | 103 | 102 |
| tan δ (60°C) | 88 | 74 | 121 |
| EB | 110 | 125 | 85 |
| Wear resistance | 108 | 102 | 90 |

| | | | |
|---|---|---|---|
| *1: NR (STR20) *2: BR (Nipol BR1220 available from Zeon Corporation) *3: Carbon black 1 (trade name: Show Black N134, available from Cabot Japan K.K., CTAB specific surface area = 145 m²/g) *4: Carbon black 2 (trade name: Show Black N234, available from Cabot Japan K.K., CTAB specific surface area = 115 m²/g) *5: Carbon black 3 (trade name: Show Black N330T, available from Cabot Japan K.K., CTAB specific surface area = 75 m²/g) *6: Silica 1 (Zeosil 1085GR, available from Solvay, CTAB specific surface area = 85 m²/g) *7: Silica 2 (Zeosil 115GR, available from Solvay, CTAB specific surface area = 115 m²/g) *8: Silane coupling agent (Si69, available from Evonik Degussa Japan Co., Ltd.) *9: Zinc oxide (Zinc Oxide III, available from Seido Chemical Industry Co., Ltd.) *10: Stearic acid (Beads Stearic Acid, available from NOF Corporation) *11: Anti-aging agent 6C (Santoflex 6PPD, available from Flexsys) *12: Anti-aging agent RD (NOCRAC 224, available from Ouchi Shinko Chemical Industrial Co., Ltd.) *13: Wax (Paraffin Wax, available from Ouchi Shinko Chemical Industrial Co., Ltd.) *14: Aroma oil (Extract No. 4S, available from Showa Shell Sekiyu K.K.) * 15: Insoluble sulfur (MUCRON OT-20, available from Shikoku Chemicals Corporation) * 16: Sulfenamide-based vulcanization accelerator (NOCCELER NS-P, available from Ouchi Shinko Chemical Industrial Co., Ltd., sulfenamide-based) * 17: Diphenylguanidine-based vulcanization accelerator (Perkacit DPG, available from Flexsys, diphenylguanidine-based) * 18: Thiuram-based vulcanization accelerator (NOCCELER TOT-N, available from Ouchi Shinko Chemical Industrial Co., Ltd., thiuram-based) | | | |

As can be seen from the results in Table 1, the rubber composition of each of the Examples has practically adequate hardness and wear resistance and has excellent low heat build-up and elongation at break, since the rubber composition contains at least a rubber, a filler, a sulfur-containing silane coupling agent, and a vulcanization accelerator; the rubber contains from 30 to 60 parts by mass of an isoprene-based rubber and from 40 to 70 parts by mass of a butadiene rubber; the filler contains a carbon black and a silica; the CTAB specific surface area of the carbon black is from 60 to 160 m²/g; the CTAB specific surface area of the silica is from 60 to 100 m²/g; a blended amount of the filler is from 55 to 75 parts by mass per 100 parts by mass of the rubber; a blended amount of the silica (silica proportion) with respect to the blended amount of the filler is 10 mass% or more; and a blended amount of the vulcanization accelerator with respect to the silica proportion is from 2.5 to 8 mass%.

In contrast, in Comparative Example 1, hardness and wear resistance are deteriorated, since the blended amount of the vulcanization accelerator is less than 2.5 mass% with respect to the silica proportion.

In Comparative Example 2, EB and wear resistance are deteriorated, since the blended amount of the vulcanization accelerator is more than 8 mass% with respect to the silica proportion.

In Comparative Example 3, low heat build-up, elongation at break, and wear resistance are deteriorated, since the CTAB specific surface area of the silica is more than 100 m²/g.

The present invention includes the following embodiments.

### First Embodiment:

A rubber composition containing at least a rubber, a filler, a sulfur-containing silane coupling agent, and a vulcanization accelerator;
the rubber containing from 30 to 60 parts by mass of an isoprene-based rubber and from 40 to 70 parts by mass of a butadiene rubber;
the filler containing a carbon black and a silica;
the carbon black having a CTAB specific surface area of from 60 to 160 m²/g;
the silica having a CTAB specific surface area of from 60 to 100 m²/g;
a blended amount of the filler being from 55 to 75 parts by mass per 100 parts by mass of the rubber;
a blended amount of the silica (silica proportion) with respect to the blended amount of the filler being 10 mass% or more; and
a blended amount of the vulcanization accelerator with respect to the silica proportion being from 2.5 to 8 mass%.

### Second Embodiment:

The rubber composition according to the first embodiment, wherein {the CTAB specific surface area of the carbon black (m²/g) × a blended amount of the carbon black (parts by mass)} + {the CTAB specific surface area of the silica (m²/g) × a blended amount of the silica (parts by mass)} is from 5500 to 7100.

### Third Embodiment:

The rubber composition according to the first or second embodiment, wherein the CTAB specific surface area of the carbon black is from 70 to 130 m²/g.

### Fourth Embodiment:

The rubber composition according to any one of the first to third embodiments, wherein the CTAB specific surface area of the silica is from 65 to 95 m²/g.

### Fifth Embodiment:

The rubber composition according to any one of the first to fourth embodiments, wherein the vulcanization accelerator is one or more selected from a sulfenamide-based vulcanization accelerator and a thiuram-based vulcanization accelerator.

### Sixth Embodiment:

The rubber composition according to any one of the first to fifth embodiments, wherein the blended amount of the silica (silica proportion) with respect to the blended amount of the filler is from 20 to 95 mass%.

### Seventh Embodiment:

A tire including a rim cushion, the rim cushion containing the rubber composition according to any one of the first to sixth embodiments.

## Claims

1. A rubber composition comprising at least a rubber, a filler, a sulfur-containing silane coupling agent, and a vulcanization accelerator;
the rubber containing from 30 to 60 parts by mass of an isoprene-based rubber and from 40 to 70 parts by mass of a butadiene rubber;
the filler containing a carbon black and a silica;
the carbon black having a CTAB specific surface area of from 60 to 160 m²/g;
the silica having a CTAB specific surface area of from 60 to 100 m²/g;
a blended amount of the filler being from 55 to 75 parts by mass per 100 parts by mass of the rubber;
a blended amount of the silica (silica proportion) with respect to the blended amount of the filler being 10 mass% or more; and
a blended amount of the vulcanization accelerator with respect to the silica proportion being from 2.5 to 8 mass%.

2. The rubber composition according to claim 1, wherein {the CTAB specific surface area of the carbon black (m²/g) × a blended amount of the carbon black (parts by mass)} + {the CTAB specific surface area of the silica (m²/g) × a blended amount of the silica (parts by mass)} is from 5500 to 7100.

3. The rubber composition according to claim 1, wherein the CTAB specific surface area of the carbon black is from 70 to 130 m²/g.

4. The rubber composition according to claim 1, wherein the CTAB specific surface area of the silica is from 65 to 95 m²/g.

5. The rubber composition according to claim 1, wherein the vulcanization accelerator is one or more selected from a sulfenamide-based vulcanization accelerator and a thiuram-based vulcanization accelerator.

6. The rubber composition according to claim 1, wherein the blended amount of the silica (silica proportion) with respect to the blended amount of the filler is from 20 to 95 mass%.

7. A tire comprising a rim cushion, the rim cushion comprising the rubber composition according to claim 1.
